# EUROPÄISCHE PATENTSCHRIFT

(11) **EP 0 512 447 B1**
(45) Veröffentlichungstag und Bekanntmachung des Hinweises auf die Patenterteilung: **12.10.1994**
(21) Anmeldenummer: 92107485.2
(22) Anmeldetag: 02.05.1992
(51) Int. Cl.: C02F 3/20

(54) **Vorrichtung zum Eintragen von Sauerstoff in Gewässer**
Apparatus for aeration of waters
Dispositif pour aérer des eaux

(30) Priorität: 10.05.1991 DE 4115300
(43) Veröffentlichungstag der Anmeldung: 11.11.1992
(73) Patentinhaber: MESSER GRIESHEIM GMBH, D-60270 Frankfurt (DE)
(72) Erfinder: Müller, Berthold, W-4150 Krefeld (DE)

(56) Entgegenhaltungen:
- WO-A-87/07590
- WO-A-90/08742
- US-A- 1 681 890

## Beschreibung

Die Erfindung betrifft eine Vorrichtung zum Eintragen von Sauerstoff oder sauerstoffhaltigem Gas in Wasserbecken von Kläranlagen oder in natürliche Gewässer nach dem Oberbegriff des Anspruches 1.

In Kläranlagen wird zunehmend eine höhere Sauerstoffverfügbarkeit gefordert, da die Kläranlagen vielfach überlastet sind und die behördlichen Anforderungen hinsichtlich Nitrifikation und Denitrifikation sowie der Herabsetzung der Ablaufgrenzwerte (BSB₅, CSB usw. ) ständig steigen. Durch die höhere Sauerstoffverfügbarkeit läßt sich die Reinigungsleistung der Anlagen steigern. Ebenso kommt es durch die Belastung natürlicher Oberflächengewässer mit Verunreinigungen, insbesondere Ammonium, Phosphat und organische Stoffe, sowie Eingriffe in den natürlichen Gewässerhaushalt durch Regulierung, Einleitung von Kühlwasser usw. zu Sauerstoffmangelsituationen. Infolge des Sauerstoffmangels kommt es zu Fischsterben und Geruchsemissionen.

Die Ursachen des Sauerstoffmangels in Gewässern sind vor allem die Überdüngung mit Ammonium und Phosphat und das dadurch hervorgerufene verstärkte Algenwachstum Beim Absterben der Algen tritt eine hohe Sauerstoffzehrung auf, die durch den natürlichen Sauerstoffeintrag nicht abgedeckt werden kann. Hinzu kommen organische Stoffe von Kläranlagenabläufen und Industrieabwässern, sowie die Einleitung von Kühlwässern mit höheren Temperaturen, die eine verstärkte Sauerstoffzehrung herbeiführen. So ist besonders in den Sommermonaten in vielen Gewässern ein akuter Sauerstoffmangel vorhanden.

Auch bei Kläranlagen, in denen im Prinzip in konzentrierter Form die gleichen Prozesse wie in der Natur ablaufen, kommt es bei Überlastungen durch übermäßige Zufuhr von Schmutzstoffen zu Sauerstoffmangel und entsprechend ungenügenden Reinigungsleistungen. Durch behördliche Auflagen sind außerdem viele bestehende Anlagen, die bisher eine genügende Reinigungsleistung zeigten, ebenfalls gezwungen, ihre Reinigungsleistung zu erhöhen. Dies bedeutet vor allem, daß die Biologie (Belebung) leistungsfähiger gestaltet werden muß. Eine wirksame Maßnahme besteht hierbei darin, die Bakterienmasse bei gleichzeitiger erhöhter Sauerstoffzufuhr zu steigern. Damit kann im Idealfall bei gleichem Becken-volumen die doppelte Schmutzfracht abgebaut werden.

Es besteht daher die Notwendigkeit, sowohl in natürlichen Oberflächengewässern als auch im Abwasser von Kläranlagen den Sauerstoffgehalt zu erhöhen, wenn bestimmte festgelegte Grenzwerte unterschritten werden.

In Kläranlagen kann die erhöhte Sauerstoffzufuhr mit den vorhandenen Belüftungssystemen meist nicht mehr abgedeckt werden, so daß ein zusätzliches Sauerstoffeintragssystem erforderlich ist. Es sind verschiedene derartige Belüftungssysteme für die zusätzliche Sauerstoffzufuhr bekannt. Bewährt haben sich poröse oder geschlitzte Gummimembranschläuche sowohl in Kläranlagen als auch in natürlichen Gewässern. Diese Schläuche werden sowohl mit Stützrohren als auch separat zum Sauerstoffeintrag genutzt und befinden sich frei in dem anzureichernden Wasser. Zur Beschwerung werden sie auf Metallgerüsten oder Metallmatten aufgebracht. Je nach dem, ob reiner Sauerstoff oder ein sauerstoffhaltiges Gas wie Luft durch die Schläuche eingebracht werden sollen, sind die Schläuche unterschiedlich ausgebildet. Beim Einsatz von Luft werden dünnwandige Schläuche mit größeren Schlitzen verwendet, da ein größerer Gasdurchsatz erforderlich ist und der Energiebedarf gering gehalten werden soll. Beim Einsatz von reinem Sauerstoff steht der Druck des Sauerstoffes dem Anwender kostenlos zur Verfügung, so daß sich dickwandigere Schläuche einsetzen lassen, mit denen sehr kleine Sauerstoffblasen erzielt werden können. Diese Schläuche sind außerdem ziemlich unempfindlich gegen Verstopfen. Bei der Sauerstoffeintragung über Schläuche läßt sich eine sehr gute Sauerstoffausnutzung erzielen. Der Einsatz der Schläuche kann mit einer separat erzeugten Wasserströmung kombiniert werden. Die Schläuche werden so ausgelegt, daß möglichst kleine Gasblasen gebildet werden, um eine optimale Aufenthaltszeit und Verteilung im Wasser zu erzielen. Dadurch wird der Sauerstoffeintrag optimiert. Die Schläuche werden hierbei so angeordnet, daß sie entweder frei umspült vom Wasser sind oder auf eine Fläche aufliegen.

Ein Nachteil der Gummimembranschläuche besteht darin, daß die sich bildenden Blasen sofort nach oben steigen. Es kann sich hierbei eine walzenartig rotierende Wasserströmung nach oben ausbilden, welche die Blasen verstärkt mitreißt, so daß die Verweilzeit herabgesetzt und die Sauerstoffausnutzung erheblich vermindert wird. Auch wenn eine zusätzlich erzeugte separate Wasserströmung vorhanden ist, ändert sich an diesen Blasenaufstiegsverhältnissen im Prinzip nichts, da die Verweilzeit unbeeinflußt bleibt.

Können die Schläuche nicht von oben fixiert werden, z.B. in Form von Kerzen in Kläranlagen oder durch freischwingende Abhängung, besteht vor allem in Gewässern die Gefahr, daß die Schläuche in Form schwerer Schlauchmatten in den Schlamm und das Sediment einsinken und nur eine ungenügende oder überhaut keine Funktion mehr zeigen. Es sind daher erhebliche Aufwendungen nötig, um den Untergrund so herzurichten, daß eine Verlegung der Schlauchelemente erfolgen kann, ohne daß die beschriebenen Nachteile auftreten.

Auch die Anordnung der Schläuche in Gestellen, vor allen in Kläranlagen mit einer Zwangsströmung, hat Nachteile. Durch die Gestelle kann die Strömungsgeschwindigkeit auf dem Beckenboden herabgesetzt werden, so daß sich Schlammablagerungen bilden. Dies gilt entsprechend auch für strömende Gewässer.

Der Erfindung liegt daher die Aufgabe zugrunde, eine Vorrichtung zum Eintragen von Sauerstoff in Gewässer mittels poröser oder geschlitzter Schläuche zu schaffen, welche eine hohe Sauerstoffeintragsleistung und Sauerstoffausnutzung aufweist und die gegen Verschlammung weitgehend sicher ist.

Ausgehend von dem im Oberbegriff des Anspruches 1 berücksichtigten Stand der Technik ist diese Aufgabe erfindungsgemäß gelöst mit den im kennzeichnenden Teil des Anspruches 1 angegebenen Merkmalen.

Vorteilhafte Weiterbildungen der Erfindung sind in den Unteransprüchen angegeben.

Die Vorteile der erfindungsgemäßen Vorrichtung bestehen einerseits darin, daß die günstigen Eigenschaften von porösen oder geschlitzten Schläuchen als Aggregat zum Eintragen von Sauerstoff oder sauerstoffhaltigem Gas in Gewässer voll erhalten bleiben. Dies sind vor allem die hohe Sauerstoffausnutzung, die Bildung sehr kleiner Blasen und damit verbunden ein intensiver Grenzflächenaustausch zwischen dem Sauerstoff in der Blase und dem Wasser. Andererseits werden keine aufwendigen Trägergestelle benötigt, welche zudem eine eventuell vorhandene Wasserströmung behindern können. Die erfindungsgemäßen Vorrichtungen können problemlos auch auf schlammigem Untergrund verlegt werden, so daß die Gefahr von Schlammablagerungen auf den Schläuchen praktisch ausgeschlossen ist. Wegen der großflächigen Ausbildung der erfindungsgemäßen Vorrichtung werden die austretenden Blasen am Aufstieg gehindert und eine lange Verweilzeit der Blasen im Wasser sichergestellt.

Die Zeichnungen veranschaulichen drei Ausführungsbeispiele der Erfindung.

Es zeigen:
- Fig.1: eine Draufsicht auf eine Vorrichtung mit einem Wellblech mit rechteckigen Mulden,
- Fig.2: einen Schnitt entlang der Linie A-A in Fig.1,
- Fig.3: einen Schnitt durch eine Vorrichtung mit einem Wellblech mit runden Mulden,
- Fig.4: die Vorrichtung von Fig.3 mit zusätzlichen Schikanen.

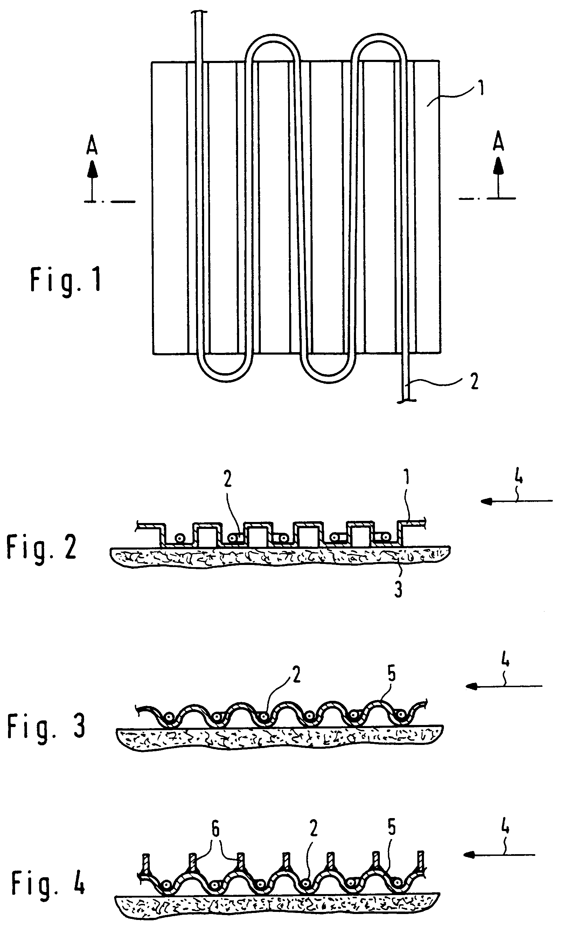

Die in den Fig. 1 und 2 dargestellte Vorrichtung besteht aus einem Wellblech 1 mit rechteckigen Mulden, in denen ein poröser Schlauch 2 verlegt ist. Der Schlauch 2 wird durch nichtdargestellte Klammern in den Mulden fixiert. Das Wellblech 1 liegt auf dem Untergrund 3 auf. Auch wenn der Untergrund 3 sehr weich und schlammig ist, gewährleistet es die erfindungsgemäße Vorrichtung, daß der Schlauch 2 von dem Schlamm im wesentlichen nicht bedeckt werden kann. Der Pfeil 4 zeigt die Richtung einer Wasserströmung an, welche bevorzugt quer zu den Mulden des Wellbleches 1 gerichtet ist. Hierbei bildet sich an jeder Mulde ein Wirbel aus, welcher die Blasenbildung und den Blasenaufstieg günstig beeinflußt und die Ablagerung von Schlamm verhindert. Für die Ausbildung dieser Wirbel sind Wellbleche mit rechteckigen Mulden, wie sie in den Fig.1 und 2 dargestellt sind, besonders günstig, da die scharfen Kanten der Mulden die Wirbelbildung verstärken.

Es können jedoch auch ohne weiteres Wellbleche 5 mit runden Mulden verwendet werden, wie sie in den Fig. 3 und 4 dargestellt sind. Fig.4 zeigt eine Ausführungsform, bei welcher auf dem Wellblech 5 zusätzlich Schikanen 6 angebracht sind, welche die Wirbelbildung verstärken.

## Patentansprüche

1. Vorrichtung zum Eintragen von Sauerstoff oder sauerstoffhaltigem Gas in Wasserbecken von Kläranlagen oder in natürliche Gewässer mittels von dem sauerstoffhaltigen Medium durchströmter poröser oder geschlitzter Schläuche,
dadurch gekennzeichnet,
daß die Schläuche (2) in den Mulden eines Wellbleches (1, 5) oder eines wellblechähnlichen Materials angeordnet sind.

2. Vorrichtung nach Anspruch 1,
dadurch gekennzeichnet,
daß das Wellblech (1) rechteckige Mulden besitzt.

3. Vorrichtung nach Anspruch 1 oder 2,
dadurch gekennzeichnet,
daß auf den Wellenbergen des Wellbleches Schikanen (6) befestigt sind.

4. Vorrichtung nach einem der Ansprüche 1 bis 3,
dadurch gekennzeichnet,
daß das Wellblech mit Schlauch als Bauelement zum Zusammensetzen großflächiger Eintragungsaggregate ausgebildet ist.

## Claims

1. Apparatus for introducing oxygen or oxygen-containing gas into water tanks of sewage treatment plants or into natural waters by means of porous or slotted hoses through which flows the oxygen-containing medium, characterized in that the hoses (2) are arranged in the troughs of a corrugated metal sheet (1, 5) or of a corrugated metal sheet-like material.

2. Apparatus according to Claim 1, characterized in that the corrugated metal sheet (1) has rectangular troughs.

3. Apparatus according to Claim 1 or 2, characterized in that baffles (6) are attached to the corrugation peaks of the corrugated metal sheet.

4. Apparatus according to one of Claims 1 to 3, characterized in that the corrugated metal sheet with a hose is designed as a component for the assembly of large surface-area introduction units.

## Revendications

1. Dispositif pour injecter de l'oxygène ou un gaz contenant de l'oxygène dans des bassins d'eaux d'installations d'épuration ou des eaux naturelles à l'aide de tuyaux poreux ou tendus parcourus par un milieu contenant de l'oxygène, dispositif caractérisé en ce que les tuyaux (2) sont placés dans les goulottes d'une tôle ondulée (1, 2) ou d'un matériau analogue à une tôle ondulée.

2. Dispositif selon la revendication 1, caractérisé en ce que la tôle ondulée (1) comporte des goulottes rectangulaires.

3. Dispositif selon les revendications 1 ou 2, caractérisé en ce que des chicanes (6) sont fixées au sommet des ondulations de la tôle ondulée.

4. Dispositif selon l'une des revendications 1 à 3, caractérisé en ce que la tôle ondulée est munie de tuyaux comme éléments constructifs pour former des ensembles d'intégration de grande surface.
